(19) Europäisches Patentamt
European Patent Office
Office européen des brevets

(11) Publication number: 0 678 556 A1

(12) **EUROPEAN PATENT APPLICATION**

(21) Application number: **95201489.2**

(51) Int. Cl.[6]: **C08L 81/02**, C08L 71/12

(22) Date of filing: **07.11.89**

This application was filed on 06 - 06 - 1995 as a divisional application to the application mentioned under INID code 60.

(30) Priority: **08.11.88 JP 280340/88**
**23.02.89 JP 41649/89**
**27.02.89 JP 43200/89**
**28.02.89 JP 45489/89**
**10.05.89 JP 115173/89**
**24.05.89 JP 128943/89**
**24.07.89 JP 188883/89**
**31.07.89 JP 198726/89**
**10.08.89 JP 205620/89**

(43) Date of publication of application:
**25.10.95 Bulletin 95/43**

(60) Publication number of the earlier application in accordance with Art.76 EPC: **0 368 413**

(84) Designated Contracting States:
**BE DE ES FR GB IT NL**

(71) Applicant: **GE PLASTICS JAPAN LTD.**
**Itohpia Nihonbashi-Honcho Building**
**2-7-1 Nihonbashi-Honcho**
**Chuo-ku**
**Tokyo 103 (JP)**

(72) Inventor: **Inoue, Kazunari**
**516-3 Kamimita-cho**
**Utsunomiya City,**
**Tochigi Prefecture (JP)**
Inventor: **Saito, Akihiro**
**3413-84 Ishiimachi**
**Utsunomiya City,**
**Tochigi Prefecture (JP)**
Inventor: **Morioka, Masataka**
**13-7 Daimachi**
**Moka City Tochigi Prefecture (JP)**

(74) Representative: **Smulders, Theodorus A.H.J., Ir. et al**
**Vereenigde Octrooibureaux**
**Nieuwe Parklaan 97**
**NL-2587 BN 's-Gravenhage (NL)**

(54) **Polyphenylene sulfide resin composition.**

(57) A resin composition comprising polyphenylene sulfide and polyphenylene ether is modified with the addition of a compound having a functional group, whereby impact resistance of a molded article produced from the resin composition is improved.

EP 0 678 556 A1

## Field of the Invention

The present invention relates a polyphenylene sulfide resin composition, particularly such a resin composition having improved brittleness to impact and good appearance and heat resistance.

## Background of the Invention

Polyphenylene sulfide has good resistance to heat, flame and chemicals and high regidity, and is a very useful resin as an engineering plastic. However, it also has a drawback that it is weak to impact. Accordingly, there were proposed resin compositions in which excellent properties of polyphenylene sulfide are utilized or its drawbacks are improved.

For instance, Japanese Patent Application Laid-Open No. 156561/75 discloses a resin composition comprising polyphenylene ether and polyphenylene sulfide in which polyphenylene sulfide is added to improve moldability and fire-resistant of polyphenylene ether.

Japanese Patent Application Laid-Open No. 69255/78 discloses a polyphenylene sulfide resin composition containing polyphenylene sulfide and polyamide. This intends to improve brittleness of polyphenylene sulfide.

Further, Japanese Patent Application Laid-Open No. 213758/84 proposes a resin composition in which a polyamide resin and an epoxy resin are admixed to a blend of polyphenylene sulfide and polyphenylene ether in order to improve compatibility between polyphenylene sulfide and polyphenylene ether.

If polyphenylene ether and polyamide are blended to polyphenylene sulfide to improve brittleness of polyphenylene sulfide, the resin composition obtained by simple mixing is brittle and has poor appearance, because polyphenylene sulfide and polyphenylene ether are less compatible with each other. When polyamide is admixed to polyphenylene sulfide, compatibility between polyphenylene sulfide and polyamide is insufficient, so that improvement of brittleness of polyphenylene sulfide is insufficient and a new problem, delamination, is furthermore caused. In the case where compatibility between polyphenylene sulfide and polyphenylene ether is improved by addition of polyamide and an epoxy resin, chemical reaction of the epoxy resin with the polyamide and the polyphenylene sulfide takes place, which results in a problem of unstable melt flow properties.

## The Brief Description of the Invention

The purpose of the present invention is to provide a polyphenylene sulfide resin composition in which polyphenylene sulfide is sufficiently compatibilized with polyphenylene ether, whereby the aforesaid problems are solved.

The present inventors have now found that a molded product of a resin composition comprising polyphenylene sulfide and polyphenylene ether is excellently improved in impact resistance by blending particular compounds with the resin composition, blending polyamide and particular compounds, or previously subjecting polyphenylene ether to particular modification.

Thus, the present invention is a resin composition comprising a polyphenylene sulfide resin and a polyphenylene ether resin, characterized in that the resin composition contains

(A) from 10 to 97 parts by weight of a polyphenylene sulfide resin,

(B) from 3 to 90 parts by weight of a polyphenylene ether resin or a combination of a

(C) a combination of the following (i) and (ii):

(i) from 0.01 to 10 parts by weight of at least a compound having, in a molecule, a group selected from amino, epoxy, mercapto, halogene, isocyanato and ureido groups; and a chemical structure selected from Y-O-C, Y-OH, Y-H, Y-O-P, Y-NH, Y-N-C, Y-N=C, Y-Cl, Y-Br and Y-I, wherein Y is an element selected from the 3A, 4A, 5A, 3B, 4B and 5B groups of the periodic table,

(ii) from 0.01 to 10 parts by weight of

(1) at least a saturated aliphatic polycarboxylic acid or derivative thereof,

(2) at least a compound having, in a molecule, a carbon-carbon double or triple bond, and an acid anhydride, carboxylic acid, acid amide, imide,

carboxylic ester, amino, hydroxyl or epoxy group, and/or

(3) at least a compound having, in a molecule, a group represented by the formula

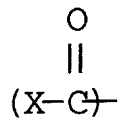

(wherein X is F, Cl, Br, I, OH or OR with R being H, alkyl or aryl group) and an acid anhydride, carboxylic acid, acid amide, imide, carboxylic ester, amino or hydroxyl group,
the total of the components (A) and (B) being 100 parts by weight.

Brief Description of the Drawings

Figure 1 is an electronmicroscopic photograph of a cross section of a molded article from Example 1. Figures 2, 3 and 4 are those from Comparative Examples 1, 2 and 5, respectively. One cm on the photos corresponds to about one micron meter.

Detailed Description of the Invention

The polyphenylene sulfide resin used in the invention (hereinafter referred to as PPS) contains preferably at least 70 mole % of a structural unit represented by the general formula:

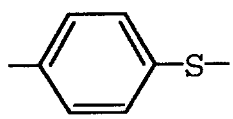

which then gives excellent properties to the composition. Methods of the polymerization for PPS include a method where p-dichlorobenzene is polymerized in the presence of sulfur and sodium carbonate, a method where polymerization is carried out in a polar solvent in the presence of sodium sulfide or sodium hydrosulfide and sodium hydroxide, or hydrogen sulfide and sodium hydroxide, a method where p-chlorothiophenol is self-condensed, and a preferred method where sodium sulfide is reacted with p-dichlorobenzene in an amide type solvent such as N-methyl pyrrolidone and dimethyl acetamide or a sulfone type solvent such as sulfolane. In these, it is preferred to add an alkali metal salt of carboxylic acid or sulfonic acid or alkali metal hydroxide in order to regulate a polymerization degree. As a copolymerized component,

a meta bond

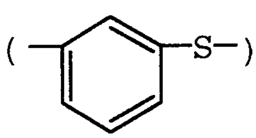

,

ortho bond

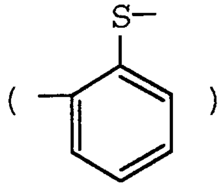

,

ether bond

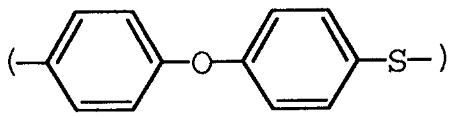

,

sulfone bond

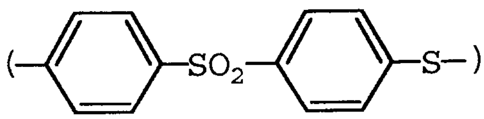

,

biphenyl bond

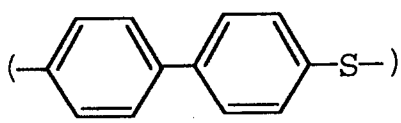

,

substituted phenylsulfide bond

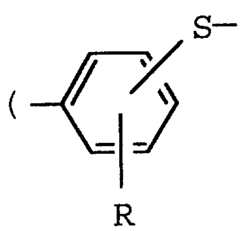

,

wherein R represents alkyl, nitro, phenyl, alkoxy, carboxylic acid or its metal salt group) and trifunctional phenyl sulfide bond

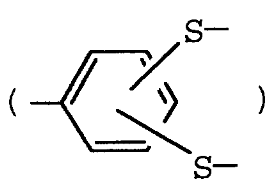

may be incorporated as far as crystallinity of the polymer is not greatly affected. However, the amount of the copolymerized components is preferrably 10 mole % at most. When tri- or more functional phenyl, biphenyl or naphthyl sulfide bond is particularly selected, 3 mole % or less is preferred with 1 mole % or less being more preferred.

Such PPS may be synthesized in a usual preparation process, such as (1) reaction of a hologen substituted aromatic compound with alkali sulfide (U.S. Patent 2,513,188, Japanese Patent Publications 27671/69 and 3368/70), (2) condensation reaction of thiophenols in the presence of alkali catalysts or cupper salts (U.S. Patent 3,274,165, U.S. Patent 1,160,660) and (3) condensation reaction of aromatic compounds in the coexistence of sulfur chloride and a Lewis acid catalyst (Japanese Patent Publication 27255/71, Belgian Patent 29437). These may be selected depending upon purposes.

PPS is now commercially available from several companies. There are various grades having different crosslinking densities and viscosities. PPS having less cross-linked structure is preferred in the present invention.

Polyphenylene ether resin (hereinafter referred to as PPE) is a generic name of polymers represented by the general formula:

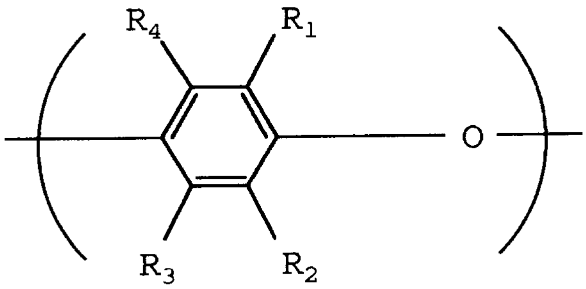

(A)

wherein R1, R2, R3 and R4 are a monovalent substituent selected from a hydrogen atom, a halogen atom, an alkyl group, an alkoxy group, a haloalkyl and haloalkoxy group in which at least 2 carbon atome are present between a halogen atom and a phenyl ring with the exclusion of those having tertiary α-carbon atoms and n is an integer representing a degree of polymerization. The polymer may be a homopolymer or a copolymer of two or more comonomers represented by the above general formula. In preferred examples, R1 and R2 are an alkyl group of 1 to 4 carbon atoms, and R3 and R4 are a hydrogen atom or an alkyl group of 1 to 4 carbon atoms. For instance, there can be named poly(2,6-dimethyl-1,4-phenylene)ether, poly(2,6-diethyl-1,4-phenylene)ether, poly(2-methyl-6-ethyl-1,4-phenylene)ether, poly(2-methyl-6-propyl-1,4-phenylene)ether, poly(2,6-dipropyl-1,4-phenylene)ether and poly(2-ethyl-6-propyl-1,4-phenylene)ether. A typical polyphenylene ether copolymer is a copolymer in which a part of the aforesaid polyphenylene ether recurring unit is replaced with tri-alkyl substituted phenol, such as 2,3,6-trimethylphenol. Further, styrene type compounds may be grafted on these polyphenylene ethers to yield copolymers. Examples of the styrene type compound-grafted polyphenylene ethers are copolymers grafted with styrene, alpha-methyl styrene, vinyl toluene and chlorostyrene.

The polystyrene resin used in the present invention (hereinafter referred to as PS) is known per se and must contain at least 25% by weight, based on the polymer, of recurring units derived from vinyl compounds represented by the general formula:

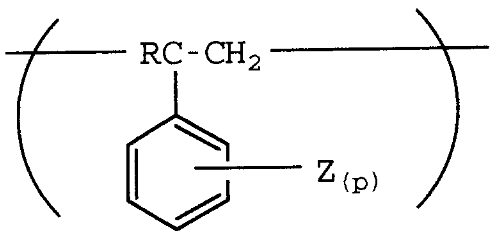

wherein R is a hydrogen atom or a $C_1$ - $C_4$ alkyl group, Z represents a substitutent halogen or $C_1$ - $C_4$ alkyl group, and p is an integer from zero to 5. Such styrene polymers include homopolymer of styrene or derivatives thereof; styrene polymers mixed or modified with natural or synthetic elastomers such as polybutadiene, polyisoprene, butyl rubber, EPDM, ethylene-propylene copolymers, natural rubber and epichlorohydrin; and styrene-containing copolymers such as styrene-acrylonitrile copolymers (SAN), styrene-butadiene copolymers, styrene-maleic anhydride copolymers and styreneacrylonitrile-butadiene copolymers (ABS). Styrene polymers preferably used in the invention are a styrene homopolymer and rubber-reinforced polystyrene. A ratio of the mixed styrene resin to the polyphenylene ether resin is preferably in a range where excellent properties of the polyphenylene ether resin are not damaged. Accordingly, preferred is a ratio of 20 to 100 parts by weight of PPE to 0 to 80 parts by weight of PS.

In the first aspect of the invention, the polyphenylene sulfide resin (A) and the polyphenylene ether resin or a combination of it with the polystyrene resin (B) are mixed with each other in a ratio of from 10 to 97 parts, preferably from 20 to 80 parts by weight, of (A) to 3 to 90 parts by weight, preferably 20 to 80 parts by weight, of (B). If PPS is less than the above limit, the properties of PPS are not exhibited, so that moldability, chemical resistance and so on are poor. On the other hand, if PPS is more than the above limit, the properties of PPE are not exhibited, which results in undesired brittleness and poor dimentional precision.

Next, component (C) will be explained below. This component consists of a combination of the aforesaid two kinds of compounds (i) and (ii). If component (i) or (ii) is used alone, its effect is not sufficiently exhibited. Only when compounds (i) and (ii) are used together, the effect of compatibilization is synergistically enhanced.

As component (i), there may be used coupling agents which are generally used as surface treating agents for various fillers or as primers in adhesion or painting, such as silane type coupling agents, titanate type coupling agents, aluminium type coupling agents, phosphorus type coupling agents, zircoaluminate type coupling agents, etc.

Examples of such coupling agents which meet the requirements for component (i) include: silane type coupling agents such as N-(2-aminoethyl)-3-aminopropyl methyl dimethoxy silane, N-(2-aminoethyl)-3-aminopropyl trimethoxy silane, 3-aminopropyl triethoxy silane, 3-glycidoxy propyl trimethoxy silane, 3-glycidoxy propyl methyl dimethoxy silane, 2-(3,4-epoxy cyclohexyl)ethyl trimethoxy silane, 3-chloropropyl methyl dimethoxy silane, 3-chloropropyl trimethoxy silane, 3-mercaptopropyl trimethoxy silane, 3-chloropropyl methyl dichlorosilane, 3-chloropropyl methyl diethoxy silane, 1,3-bis(chloromethyl)-1,1,3,3-tetramethyl disilazane, 3-ureidopropyl triethoxy silane, 3-isocyanatopropyl triethoxy silane; isopropyl tri(N-aminoethyl aminoethyl)titanate; tetra(triethanolamine) zirconate; and Zircoaluminate A and S (containing an amino group or mercapto group, respectively, trade mark, available from Kusumoto Kasei Co.). Hydrolysates of the aforesaid coupling agents may also be used as component (i).

Component (i) is added in an amount of from 0.01 to 10 parts by weight, preferably from 0.05 to 4 parts by weight, to 100 parts by weight of the total of (A) and (B).

Component (ii) used in the composition according to the invention is compounds (1), (2) and/or (3) which will be explained below.

First, component (1) is a saturated aliphatic polycarboxylic acid or derivative thereof. A "saturated allphatic carboxylic acid or derivative thereof" used herein means the compounds described in WO 85/05372 and represented by the formula:

$$(R^{I}O)_mR(COOR^{II})_n(CONR^{III}R^{IV})_s$$

wherein R is a linear or branched, saturated aliphatic hydrocarbon of from 2 to 20, preferably 2 to 10, carbon atoms; $R^{I}$ is selected from the group consisting of hydrogen, and alkyl, aryl, acyl and carbonyl dioxy groups of 1 to 10, preferably 1 to 6, more preferably 1 to 4, carbon atoms, with hydrogen being most preferable; $R^{II}$ is selected from the group consisting of hydrogen, and alkyl and aryl groups of from 1 to 20 carbon atoms, preferably from 1 to 10 carbon atoms; each of $R^{III}$ and $R^{IV}$ is selected from the group consisting of hydrogen, and alkyl, aryl and acyl groups of from 1 to 10, preferably from 1 to 6, most preferably 1 to 4, carbon atoms; m is equal to 1 and $(n + s)$ is greater than or equal to 2, preferably equal to 2 or 3, and n and s are each greater than or equal to zero and $(R^{I}O)$ is in an $\alpha$ or $\beta$ position to a carbonyl group and at least two carbonyl groups are separated by 2 to 6 carbon atoms.

Examples of the derivatives of the saturated aliphatic polycarboxylic acids according to the invention include esters, amides, anhydrides, hydrates and salts of the satuated aliphatic polycarboxylic acids. Examples of the saturated aliphatic polycarboxylic acids are citric acid, malic acid and agaricic acid. Examples of acid esters include acetyl citrate and mono- or di- stearyl citrates and the like. Suitable acid amides include, for example, N,N'-diethyl citric acid amide; N,N'-dipropyl citric acid amide; N-phenyl citric acid amide; N-dodecyl citric acid amide; N,N'-didodecyl citric acid amide and N-dodecyl malic acid amide.

The compounds under the aforesaid (2) are described in Japanese Patent Application Laid-Open No. 49753/81. Examples of such include maleic anhydride, maleic acid, fumaric acid, maleimide, maleic hydrazide, reaction products of maleic anhydride with diamines, such as those having the structures:

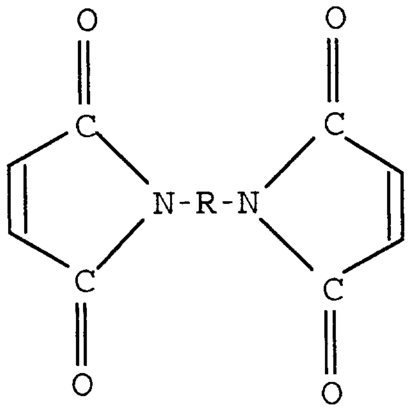

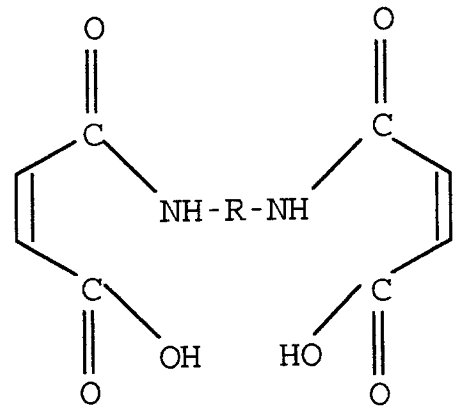

(wherein R represents an aliphatic or aromatic group.), methylnadic anhydride, dichloromaleic anhydride, maleic acid amide, natural oils and fats such as soybean oil, tung oil, cactor oil, linseed oil, hempseed oil, cottonseed oil, sesami oil, rapeseed oil, peanut oil, tsubaki oil, olive oil, coconut oil and sardine oil, epoxidated natural oils and fats such as epoxidated soybean oil, unsaturated carboxylic acid such as acrylic acid, butenoic acid, crotonic acid, vinyl acetic acid, methacrylic acid, pentenoic acid, angelic acid, tiglic acid, 2-pentenoic acid, 3-pentenoic acid, α-ethyl acrylic acid, β-methyl crotonic acid, 4-pentenoic acid, 2-hexenoic acid, 2-methyl-2-pentenoic acid, 3-methyl-2-pentenoic acid, α-ethyl crotonic acid, 2,2-dimethyl-3-butenoic acid, 2-heptenoic acid, 2-octenoic acid, 4-decenoic acid, 9-undecenoic acid, 10-undecenoic acid, 4-dodecenoic acid, 5-dodecenoic acid, 4-tetradecenoic acid, 9-tetradecenoic acid, 9-hexadecenoic acid, 2-octadecenoic acid, 9-octadececnoic acid, eicosenoic acid, docosenoic acid, erucic acid, tetracosenoic acid, mycolipenoic acid, 2,4-pentadienoic acid, 2,4-hexadienoic acid, diallylacetic acid, geranic acid, 2,4-decadienoic acid, 2,4-dodecadienoic acid, 9,12-hexadecadienoic acid, 9,12-octadecadienoic acid, hexadecatrienoic acid, linolic acid, linolenic acid, octadecatrienoic acid, eicosadienoic acid, eicosatrienoic acid, eicosatetraenoic acid, recinoleic acid, eleostearic acid, oleic acid, eicosapentaenoic acid, erucic acid, docosadienoic acid, docosatrienoic acid, docosatetraenoic acid, docosapentaenoic acid, tetracosenoic acid, hexacosenoic acid, hexacodienoic acid, octacosenoic acid and tolaacontenoic acid, or esters, acid amides or anhydrides of these unsaturated carboxylic acid, unsaturated alcohols such as allyl alcohol, crotyl alcohol, methyl vinyl carbinol, allyl carbinol, methyl propenyl carbinol, 4-pentene-1-ol, 10-undecene-1-ol, propargyl alcohol, 1,4-pendadiene-3-ol, 1,4-hexadiene-3-ol, 3,5-hexadiene-2-ol, 2,4-hexadiene-1-ol, alcohols represented by the general formulae:

$C_nH_{2n-5}OH$, $C_nH_{2n-7}OH$ or $C_nH_{2n-9}OH$

with n being positive integer, 3-butene-1,2-diol, 2,5-dimethyl-3-hexene-2,5-diol, 1,5-hexadiene-3,4-diol, and 2,6-octadiene-4,5-diol, or unsaturated amines where the OH group in the aforesaid unsaturated alcohols is replaced with an amino group, addition product of maleic anhydride or phenols to low molecular weight polymers (e.g., those with average molecular weight of 500 to 10,000) or high molecular weight polymers (e.g., those with average molecular weight above 10,000) or these polymers in which amino, carboxylic acid, hydroxyl or epoxy group is introduced. Compounds which have 2 or more same or different functional groups selected from the first group and 2 or more same or different functional groups selected from the second group are also included in component (2).

Next, component (3) is a compound which has a group represented by the formula

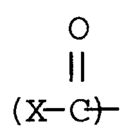

(wherein X is F, Cl, Br, I, OH or OR with R being H, alkyl or ally group), and acid anhydride, carboxylic acid, acid amide, imide, carboxylic acid ester, amino or hydroxyl group. Examples of such compounds are those described in WO 86/02086, for instance, trimellitic acid anhydride chloride, chloroethanoyl succinic acid anhydride, chloroformyl succinic acid anhydride, and 1-acetoxyacetyl-3,4-dibenzoic acid anhydride.

The compound defined under the above (ii) is preferrably added to the resin composition of the invention in an amount of from 0.01 to 10 parts by weight, particularly from 0.05 to 4 parts by weight per 100 parts by weight of the total of (A) and (B).

In the composition according to the invention, a preferred combination of (i) and (ii) is (i) aminosilane coupling agents and (ii) citric acid, malic acid, agaricic acid, maleic anhydride, maleic acid, fumaric acid, maleimide, maleic acid amide or trimellitic acid chloride.

Component (A) may separately be modified with component (C) (i), and PPE of Component (B) may separately be modified with (C) (ii), then these are mixed to form the composition of the invention. It is preferred that at least a part of PPE is separately modified with (C) (ii).

Modification of (A) with (i) and modification of PPE with (ii) may be carried out by melt-mixing (A) with (i) or PPE with (ii). In the modification of PPE with (ii), peroxide may be added in the step of melt mixing. Particularly in the case where component (ii) is those defined under (ii) (3), this and PPE may be reacted with each other in a proper solvent such as toluene, precipitated by methanol or acetone for purification and, optionally, filtered and dried, whereby desired modified PPE may be obtained.

According to the invention, PPS is made well compatible with PPE, and mechanical strength of PPS is highly improved. It is believed that this is due to the action of components (i) and (ii) as a compatibilizer.

All of the aforesaid compositions according to the invention may optionally contain a rubbery substance in an amount of 80 parts by weight or less, particularly 50 parts by weight or less, per 100 parts by weight of the total of PPS and PPE to further enhance impact resistance. When PA is contained, 20 parts by weight or less of a rubbery substance is preferably used per 100 parts by weight of the total of PPS and PPE.

The rubbery material includes natural or synthetic polymeric materials elastic at room temperature. Examples of such are natural rubber, butadiene polymer, styrene-isoprene copolymer, butadiene-styrene copolymer including random copolymer, block copolymer, graft copolymer and any other structures, isoprene polymer, chlorobutadiene polymer, butadiene-acrylonitrile copolymer, isobutylene polymer, isobutylene-butadiene copolymer, isobutylene-isoprene copolymer, acrylic ester polymer, ethylene-propyrene copolymer, ethylene-propylene-diene copolymer, Thiokol rubber, polysulfide rubber, polyurethane rubber, polyether rubber such as polypropylene oxide, and epichlorohydrin rubber.

These rubbery materials may be prepared by any known methods, such as emulsion polymerization or solution polymerization, using any known catalysts such as peroxides, trialkyl aluminium, lithium halide or nickel catalysts. The rubbery materials may have various degrees of crosslinking and various ratios among micro-structures such as cis, trans and vinyl. They may be particles of various average sizes. Further, the copolymers may be random copolymers, block copolymers or graft copolymers. The rubbery materials may also be copolymers with other monomers such as olefines, dienes, aromatic vinyl compounds, acrylic acid, acrylic esters and methacrylic esters. These comonomers may be copolymerized in any manner of random copolymerization, block copolymerization or graft copolymerization. Examples of these monomers are ethylene, propylene, styrene, chlorostyrene, $\alpha$-methylstyrene, butadiene, isobutyrene, chlorobutadiene, butene, isobutylene, acrylic acid, methyl acrylate, ethyl acrylate, butyl acrylate, methyl methacrylate and acrylonitrile. Partially modified rubbery materials may also be used in the invention, such as polybutadiene having hydroxy- or carboxy- modified terminals, partially hydrogenated styrenebutadiene block copolymers, and partially hydrogenated styrene-isoprene block copolymers.

Further, as the rubbery material, there may used styrene type elastomer such as copolymers, e.g. random, block or graft copolymers of vinyl aromatic compounds and conjugated dienes. Examples of these are hydrogenated or non-hydrogenated block copolymers represented by the formula A-B-A or A-B (wherein A is polystyrene and B is elastomeric dienes such as polybutadiene), radialtereblock copolymer of styrene with conjugated dienes, acrylic resin-modified styrenebutadiene resins; and graft copolymers obtained by graft copolymerizing a monomer or monomer mixture containing styrenes as a major component to a rubbery polymer.

Further, to the resin composition according to the invention may be added other resins, additives such as pigments, dyes and reinforcing agents (e.g., glass fiber or carbon fiber), fillers such as carbon black, silica and titanium oxide, heat resisting agents, antioxidants, anti-aging agents, lubricants, releasing agents, nucleating agents, plasticizers, flame retardants, flow-improving agents and anti-statics.

It is preferred to use a melt kneading process in preparing the composition of the invention. It is allowed to use a small amount of solvents, but this is not needed usually. As equipment used, extruders, banbury mixers, rollers and kneaders may be named in particular. These may be operated batchwise or continuously. The order of mixing is not particularly restricted. If a rubbery material is added, it is preferred to melt-knead the rubbery material and PPE in advance to thereby disperse the rubbery material in PPE.

The invention will be further explained with reference to the following Examples which are not intended to limit the invention.

In Examples, unless otherwise stated, part and % are part by weight and percentage by weight, respectively.

Examples 1 to 6

The following components were used:

(A) PPS: Ryton M2888 (trade mark, Toray Phillips Co.)

(B) PPE: Noryl (trade mark, GE Plastics Japan)

Modified PPE: PPE modified with trimellitic acid anhydride chloride, obtained by reacting 100 parts by weight of the above PPE with 2 parts by weight of trimellitic acid anhydride chloride in toluene, precipitated by methanol for purification and dried.

PS: HT 644 (trade mark, high impact polystyrene, Mitsubishi Monsanto)

Component (i):

Methyl trimethoxy silane (agent 1)
3-Aminopropyl triethoxy silane (agent 2)
3-Glycidoxypropyl trimethoxy silane (agent 3)
Isopropyl tri(N-aminoethyl aminoethyl)titanate (agent 4)
Zircoaluminate Coupling Agent A
(trade mark, Kusumoto Kasei, agent 5)

Component (ii):

Citric acid
Maleic anhydride
Optional component (rubbery material):

KRATON G1651 (trade mark, partially hydrogenated styrene-butadiene block copolymer (SEBS), Shell Chemical).

First, PPE, KG1651, HT644 and citric acid or maleic anhydride were blended in the amounts (parts by weight) indicated in Table 1 and extruded into pellets using a twin screw extruder at 320°C and 290 rpm. This pre-extrusion could well disperse KG1651 in PPE.

Then, the other components were bleded in the amounts (parts by weight) indicated in Table 1. This and the aforesaid pellets were extruded into pellets using a twin extruder at 300°C and 290 rpm. Test pieces for Izod impact tests were prepared from the pellets.

The Izod strengthes (1/8 inch with notch) were determined in accordance with ASTM D 256. The results are summarized in Table 1.

The test pieces from the resin composition of Example 1 was observed with a scanning electron microscope (SEM) to see the state of PPE dispersed in the PPS matrix. That is, small pieces were cut out from the Izot test pieces and processed by a microtome. They were then subjected to solvent etching in methylene chloride for 2 minutes while sonicating, and coated with gold. Subsequently, They were observed by SEM with 1,000 magnification. Figure 1 is the electromicroscopic photograph.

Comparative Examples 1 to 10

The components shown in Table 1 were used in the amounts (weight parts) shown in Table 1 to prepare resin compositions in a similar way as in Examples 1 to 6, from which test pieces were prepared and subjected to an Izod impact test (1/8 inch with notch) in the same conditions as in Examples 1 to 6. The results are shown in Table 1.

The test pieces from Comparative Examples 1, 2 and 5 were observed with an electronmicroscope as in Example 1. Figures 2, 3 and 4 are these electronmicroscopic photographs, respectively.

As seen from Figure 2 from Comparative Example 4 where neither component (i) nor (ii) was contained, the particle size of PPE is large and irregular and poor dispersion of PPE is observed. As seen from Figure 4, the addition of component (i) (Comparative Example 5) somewhat improves dispersion of PPE. The addition of component (ii) alone (Comparative Example 2) less improves dispersion of PPE, compared to Figure 2 (Comparative Example 1).

In contrast, as seen from Figure 1 where components (i) and (ii) were used in combination, particles of PPE are very small (average size of 1 to 2 microns) and show uniform dispersion.

Table 1

| | Example 1 | 2 | 3 | 4 | 5 | 6 | Comparative Example 1 | 2 | 3 | 4 | 5 | 6 | 7 | 8 | 9 | 10 |
|---|---|---|---|---|---|---|---|---|---|---|---|---|---|---|---|---|
| (A) Ryton M 2888 | 50 | 50 | 50 | 50 | 50 | 50 | 50 | 50 | 50 | 50 | 50 | 50 | 50 | 50 | 50 | 50 |
| (B) Noryl | 38 | 38 | 38 | 28 | 38 | 38 | 38 | 38 | 38 | 38 | 38 | 38 | 28 | 38 | 38 | 38 |
| HT 644 | - | - | - | 10 | - | - | - | - | - | - | - | - | - | 10 | - | - |
| (C) Agent 1 | - | - | - | - | - | - | - | - | - | 0.5 | - | - | 0.5 | - | - | - |
| Agent 2 | 0.5 | 0.5 | - | 0.5 | - | - | - | - | - | - | 0.5 | - | - | - | - | - |
| Agent 3 | - | - | 0.5 | - | - | - | - | - | - | - | - | 0.5 | - | - | - | - |
| Agent 4 | - | - | - | - | 0.5 | - | - | - | - | - | - | - | - | | -0.5 | - |
| Agent 5 | - | - | - | | - | 0.5 | - | - | - | - | - | - | - | - | - | 0.5 |
| (D) Citric acid | 1.0 | - | 1.0 | - | 1.0 | 1.0 | - | 1.0 | - | - | - | - | - | - | - | - |
| Maleic anhydride | - | 1.0 | - | 1.0 | - | - | - | - | 1.0 | - | - | - | 1.0 | 1.0 | - | - |
| KRATON G 1651 | 12 | 12 | 12 | 12 | 12 | 12 | 12 | 12 | 12 | 12 | 12 | 12 | 12 | 12 | 12 | 12 |
| Izod impact, Kg cm/cm | 22 | 20 | 14 | 19 | 12.0 | 10.6 | 2.0 | 2.2 | 1.8 | 2.9 | 7.2 | 5.8 | 2.7 | 2.0 | 5.6 | 4.2 |

Example 7

The PPE, the modified PPE and KRATON G 1651 were blended in the amounts (weight parts) shown in Table 2 and fed at the upper stream of a twin screw extruder, and a mixture of the remaining components, i.e. the PPS and 3-aminopropyl triethoxy silane (agent 2), was fed through a middle inlet of the extruder to prepare pellets. The extruder was set at a temperature of 320 ° C from the upperstream until the middle inlet, and 300 ° C from the middle inlet to a die part. The number of rotation was set at 290 rpm.

Test pieces for Izod impact tests were prepared from the obtained pellets and evaluated for Izod impact strength (1/8 inch with notch) in the same conditions as in Examples 1 to 6. The result is shown in Table 2.

Comparative Example 11

Example 19 was repeated to prepare resin composition pellets except that 3-aminopropyl triethoxy silane as component (C) was not used. Izod impact strength (1/8 inch with notch) was determined. The result is shown in Table 2.

Tabel 2

| | Example 7 | Comp.Ex. 11 |
|---|---|---|
| PPE | 19 | 19 |
| Modified PPE | 19 | 19 |
| KG 1651 | 12 | 12 |
| PPS | 50 | 50 |
| Agent 2 | 0.5 | - |
| Izod impact, Kg cm/cm | 20 | 2.3 |

**Claims**

1. A resin composition comprising a polyphenylene sulfide resin and a polyphenylene ether resin, characterized in that the resin composition contains:
   (A) from 10 to 97 parts by weight of a polyphenylene sulfide resin,
   (B) from 3 to 90 parts by weight of a polyphenylene ether resin or a combination of a polyphenylene ether resin and a polystyrene resin, and
   (C) a combination of the following (i) and (ii):
   (i) from 0.01 to 10 parts by weight of at least a compound having, in a molecule, a group selected from amino, epoxy, mercapto, halogene, isocyanato and ureido groups; and a chemical strucuture selected from Y-O-C, Y-OH, Y-H, Y-O-P, Y-NH, Y-N-C, Y-N=C, Y-Cl, Y-Br and Y-I, whereln Y is an element selected from the 3A, 4A, 5A, 3B, 4B and 5B groups of the periodic table,
   (ii) from 0.01 to 10 parts by weight of
   (1) at least a saturated aliphatic polycarboxylic acid or derivative thereof,
   (2) at least a compound having, in a molecule, a carbon-carbon double or triple bond, and an acid anhydride, carboxylic acid, acid amide, imide, carboxylic ester, amino, hydroxyl or epoxy group, and/or
   (3) at least a compound having, in a molecule, a group represented by the formula

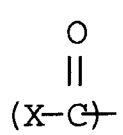
,

(wherein X is F, Cl, Br, I, OH or OR with R being H, alkyl or aryl group) and an acid anhydride, carboxylic acid, acid amide, imide, carboxylic ester, amino or hydroxyl group,

the total of the components (A) and (B) being 100 parts by weight.

2. The resin composition according to claim 1, wherein component (C) (i) is selected from the group consisting of silane type coupling agents, titanate type coupling agents, aluminium type coupling agents, phosphorus type coupling agents and zircoaluminate type coupling agents, and component (C) (ii) is selected from the group consisting of citric acid, malic acid, agaricic acid, maleic anhydride, maleic acid, fumaric acid, maleimide, maleic acid amide, trimellitic anhydride chloride and trimellitic acid chloride.

3. The resin composition according to claim 1 or 2, wherein the amount of the polyphenylene sulfide resin (A) is from 20 to 80 parts by weight, the amount of the polyphenylene ether resin or the total of the polyphenylene ether resin and the polystyrene resin (B) is from 20 to 80 parts by weight, and said (B) consists of 20 to 100% by weight of the polyphenylene ether resin and 0 to 80% by weight of the polystyrene resin.

4. The resin composition according to claim 1, wherein a rubbery material is further contained.

FIG. 2

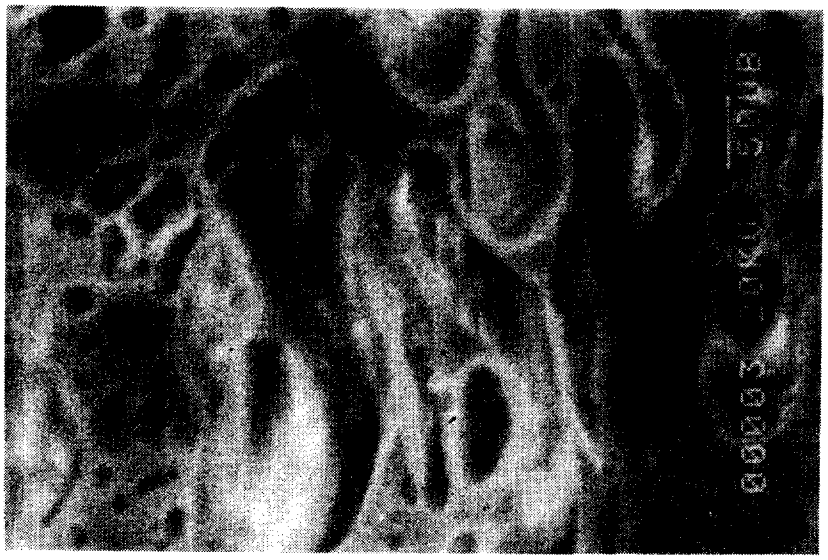

FIG. 1

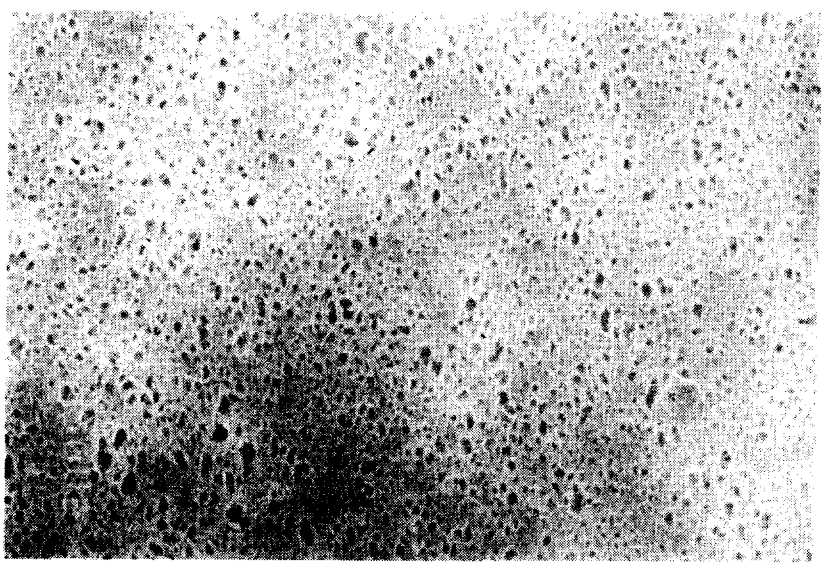

FIG. 4

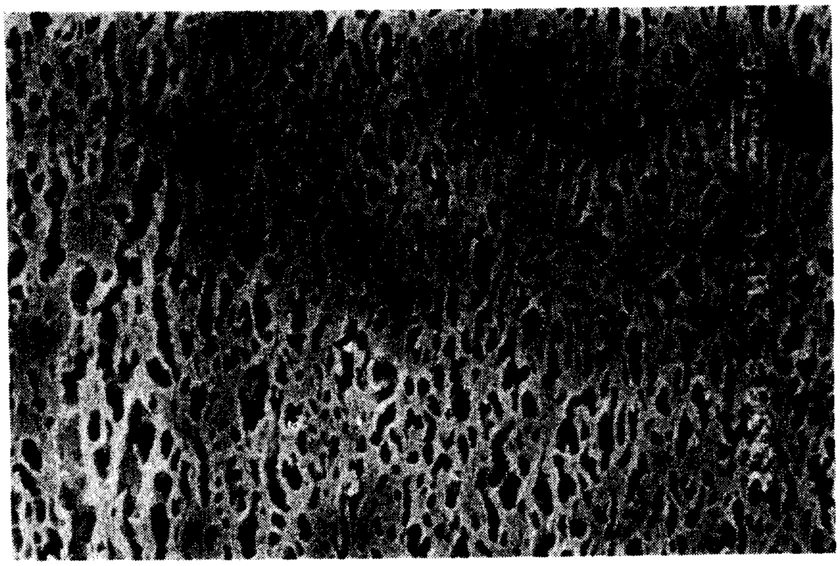

FIG. 3

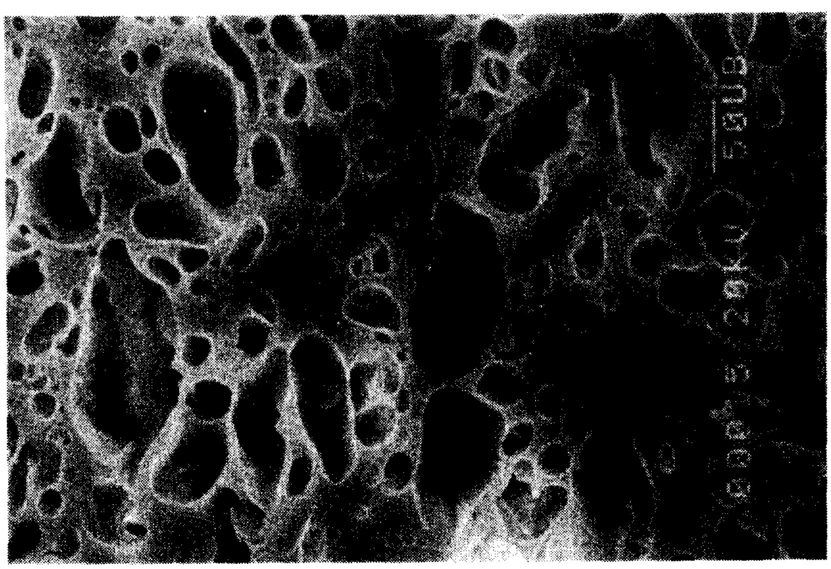

European Patent Office

# EUROPEAN SEARCH REPORT

Application Number
EP 95 20 1489

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | EP-A-0 104 543 (DAINIPPON INK & CHEMICALS) * examples 56,57 * ----- | 1 | C08L81/02 C08L71/12 |
| | | | TECHNICAL FIELDS SEARCHED (Int.Cl.5) |
| | | | C08L |

The present search report has been drawn up for all claims

| Place of search | Date of completion of the search | Examiner |
|---|---|---|
| BERLIN | 22 August 1995 | Boeker, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document